# EUROPÄISCHE PATENTSCHRIFT

(11) **EP 3 427 548 B1**
(45) Veröffentlichungstag und Bekanntmachung des Hinweises auf die Patenterteilung: **20.07.2022**
(21) Anmeldenummer: 17707202.2
(22) Anmeldetag: 16.02.2017
(51) Int. Cl.: H05B 47/19

(54) **BELEUCHTUNGSSYSTEM MIT AUTOMATISCHER BAKENKONFIGURATION**
LIGHTING SYSTEM FEATURING AUTOMATIC BEACON CONFIGURATION
SYSTÈME D'ÉCLAIRAGE À CONFIGURATION AUTOMATIQUE DE BALISES

(30) Priorität: 11.03.2016 DE 102016104483
(43) Veröffentlichungstag der Anmeldung: 16.01.2019
(73) Patentinhaber: OSRAM GmbH, 80807 München (DE)
(72) Erfinder: PEITZ, Christoph, 59556 Lippstadt (DE); FEIL, Henry, 82008 Unterhaching (DE); STUTZ, Michel, 81541 München (DE)
(74) Vertreter: Hofstetter, Schurack & Partner
(86) Internationale Anmeldenummer: PCT/EP2017/053525
(87) Internationale Veröffentlichungsnummer: WO 2017/153144

(56) Entgegenhaltungen:
- WO-A1-2009/004539
- DE-A1-102013 226 413
- US-A1- 2008 265 799
- US-A1- 2013 134 906
- US-A1- 2015 223 309
- US-A1- 2015 350 820

## Beschreibung

Die vorliegende Erfindung betrifft ein Beleuchtungssystem mit einer Leuchtvorrichtung und einer in oder an der Leuchtvorrichtung angeordneten Bake. Darüber hinaus betrifft die vorliegende Erfindung ein Verfahren zum Konfigurieren einer Bake eines Beleuchtungssystems, das eine Leuchtvorrichtung und in oder an der Leuchtvorrichtung die Bake aufweist.

Die sogenannte "Beacon-Technologie" basiert auf einem Sender-Empfängersystem. Ein "Beacon" (zu Deutsch: "Leuchtfeuer" oder auch "Bake" beziehungsweise "Peilsender") ist ein kleiner, meist batteriebetriebener Sender, der ein Signal in (definierbaren) Zeitintervallen meist auf dem Bluetooth-Low-Energy-Standard aussendet. Das Funksignal jedes Beacon ist gekennzeichnet durch eine einmalige Identifikationsnummer (sogenannte UUID). Beacons können dazu verwendet werden, um Objekten und Orten eine digitale Identifikation zu verleihen. Objekte (an denen ein Beacon installiert ist) und Orte (an denen ein Beacon z.B. an einer Wand installiert ist) können auf diese Weise von Endgeräten (z.B. Smart-Devices) im Signalfeld des Beacon identifiziert werden.

Beacons können zur Identifikation eines Ortes beziehungsweise zur Ortung verwendet werden. Durch Platzierung eines oder mehrerer Beacons in einem Gebäudeareal entsteht somit eine Art funkbasiertes Raster, in dem sich ein Smart-Device über die BLE-Schnittstelle (Bluetooth Low Energy) sowie entsprechende Algorithmen lokalisieren kann. Die individuellen Identifikationsnummern der installierten Beacons geben einem Ort dabei eine Kennung, mit der ein Smart-Device näherungsweise die Position bestimmen kann (grundsätzliches Sende-Areal des Beacon kann bestimmt werden). Algorithmen auf dem Smart-Device können die Positionsgenauigkeit z.B. über Signalstärken verbessern. Es ist dabei notwendig, dass das Smart-Device auf Informationen in einer Datenablage (z.B. auf einem Cloud-Server) zugreifen kann (z.B. Identifikationsnummer und eine Kartierung). Kommt ein Endgerät (beispielsweise Smart-Device) in die Reichweite eines Senders, kann es die Identifikationsnummer detektieren und beispielsweise über eine Serverabfrage den Standort bestimmen. Die Ortungsalgorithmen greifen dabei unter anderem auf die empfangene Signalstärke der Beacons im Umkreis zu, insbesondere als Indikator für die Entfernung zum jeweiligen Beacon.

Die vorliegende Erfindung basiert auf der grundlegenden Erfindung, Beacons in Lichttechnik/Beleuchtungstechnik zu installieren. Dabei wird insbesondere der Vorteil genutzt, dass eine Lichtinstallation einen permanenten Energiezugang bietet, um den Beacon mit Energie zu versorgen. Daraus ergibt sich wiederum der Vorteil, dass die Batterie des Beacon nicht ausgetauscht werden muss und somit entsprechende Lebenszykluskosten beziehungsweise Prozesse eingespart werden können. Darüber hinaus können auch Parametrisierungen des Beacon mit höherem Energieverbrauch eingestellt werden, ohne dass die Lebensdauer des Beacon reduziert wird. Installationsprozesse von Beacons und Lichttechnik können zudem vereinheitlicht werden. Ein weiterer Vorteil ist eine definierte Arretierungsposition eines Beacon-Senders, der gut vor Manipulation geschützt ist. Einem Ort kann somit eine klare und sichere Kennung verliehen werden.

Einen Überblick über Nutzpotentiale von Beacons in Lichttechnik bietet folgende Aufzählung:
- Energieversorgung der Lichtinstallation anstatt einer Batterie nutzen, um die Lebenszykluskosten des Beacon zu reduzieren;
- Energieversorgung der Lichtinstallation nutzen, um die Sendeparameter an den Dienst und nicht an die verfügbare Restenergie beziehungsweise die Parameter der Batterie anzupassen (beispielsweise häufige Sendezyklen erzeugen hohe Genauigkeit der Dienste, jedoch auch höheren Energieverbrauch);
- Austausch der Batterie konventioneller Beacons birgt Risiken (z.B. im Hinblick auf Fehler in der Handhabung);
- Vermeidung einer Nicht-Verfügbarkeit der Dienste durch eine unterbrechungsfreie Energieversorgung des Beacon;
- Installationsort unterhalb der Decke ist ideal für die Signalausbreitung des Beacon;
- Installationsort unterhalb der Decke macht das Gesamtsystem robuster gegen Störungen/Abschattungen durch Objekte auf Höhe der Flurebene im Gegensatz zu einer Installation des Beacon selbst auf Höhe der Flurebene;
- Beacon wird vor Manipulation/Fremdzugriff (versehentlich, mutwillig) geschützt;
- Beleuchtung und Dienste (z.B. Ortungsdienste) werden als Gesamtsystem "aus einer Hand" angeboten (d.h. Systemlieferant ist auch Dienst-Anbieter);
- Möglichkeit zur Nutzung des sicheren Kommunikationsnetzwerks der Lichtinstallation, z.B. um den Beacon zu konfigurieren oder Beacons untereinander zu vernetzen;
- Vereinheitlichung der Installationsprozesse von Beacons und Lichtinstallation;
- Möglichkeit zur Kopplung zu weiteren Systemelementen der peripheren Gebäudeinfrastruktur über das Kommunikationsnetzwerk der Lichtinstallation, z.B. Elementen der Sicherheitstechnik;
- optisch ansprechendes System, da der Beacon nicht sichtbar in der Lichtinstallation untergebracht werden kann.

Ein Beacon kann in oder an einer elektrischen Beleuchtungsvorrichtung angeordnet sein. Der Beacon kommuniziert mit einem Endgerät (z.B. Smart-Device). Dabei ist der Beacon gegebenenfalls über eine Kommunikationsverbindung mit weiteren Beacons oder mit Infrastrukturelementen verbunden.

Innerhalb eines Areals haben Menschen und Geräte gegebenenfalls die Herausforderung, sich zu orientieren, zu navigieren und andere lokale digitale Dienste ausfindig zu machen und zu nutzen (z.B. Apps oder App-Funktionen, Google Maps, Lightify Lichtsteuerung). Die Lichtinstallation mit integriertem Beacon in einem Areal wird für diese Nutzpotentiale zu einem Ortungs- beziehungsweise Orientierungssystem. Mit der damit realisierbaren Selbstortung des Endgeräts können nun Dienste bereitgestellt werden, wie etwa Navigation oder die Bereitstellung von ortsspezifischen Informationen.

Jeder Beacon musste bislang in Abhängigkeit von der Installationsposition individuell konfiguriert werden, um eine optimale Signalabdeckung sicherzustellen. Wichtige Einflussgrößen sind beispielsweise der Abstand zur Decke (abgehängte Decke) und zum Boden. Bei derzeitigen Lösungen ist die Konfiguration mit hohem manuellem Aufwand (meist während der Installation) verbunden und muss für jeden Beacon separat durchgeführt werden. Eine Rekonfiguration ist in der Regel noch aufwendiger.

Veränderungen von organischen beziehungsweise wasserreichen Objekten, Metallen oder Elektromagnetfeldveränderungen im Umfeld des Beacon haben entscheidende Auswirkungen (meist negativ) auf die Qualität des Dienstes. Darüber hinaus ändert sich unter Umständen die Gestaltung des Raums, in dem die Beacon-Leuchten installiert sind, gegebenenfalls während des Lebenszyklus der Leuchte. Eine weitere Herausforderung besteht darin, dass unter unterschiedlichen Gegebenheiten eine unterschiedliche Qualität des Signals/des Dienstes gewünscht sein kann. Eine automatische Anpassung der Parameter, welche die Qualität beeinflussen, ist jedoch nicht trivial und meist mit hoher Latenz verbunden.

Die Druckschrift US 2008/0265799 A1 beschreibt ein Beleuchtungskontrollnetzwerk. Ein Netzwerk von Beleuchtungseinheiten soll eine Beleuchtung für eine vorgegebene Umgebung ermöglichen. Das Netzwerk kontrolliert ein Beleuchtungslevel als Reaktion auf Licht, Umgebungsgeräusche und Bewegung. Mit Hilfe von Prozessoren können die Beleuchtungselemente kontrolliert werden.

Die Druckschrift US 2013/0134906 A1 beschreibt ein Beaconsystem, welches ein Beacon mit einer Energieversorgungseinheit, einer Kommunikationseinheit, einer Prozessoreinheit aufweist, welche einen Speicher und eine Uhr aufweist, welche mit einer Referenzuhr synchronisiert ist. Die Energieversorgungseinheit weist eine elektrische Energieerzeugungseinheit auf sowie eine Energiespeichereinheit.

Die Druckschrift WO 2009/004539 A1 beschreibt ein System und ein Verfahren zum Kontrollieren von Beleuchtungseinheiten, wobei eine Position von Objekten automatisch erfasst wird. Insbesondere soll eine Position von Schaufensterpuppen erfasst werden. Die Beleuchtungselemente werden in Abhängigkeit von einer detektierten Position der Objekte automatisch kontrolliert. Dabei werden insbesondere Lichtkontrollwerte zum Erzeugen von Lichteffekten eingestellt.

Die Offenlegungsschrift DE 10 2013 226 413 A1 beschreibt ein Verfahren zum Betrieb eines Beleuchtungssystems. Dieses Beleuchtungssystem sieht ein zentrales Steuergerät zum Steuern einer Mehrzahl von Leuchten vor. Mit Hilfe eines Bediengeräts kann eine Position der Leuchten angezeigt und ausgewählt werden. Das Bediengerät kann insbesondere mobil ausgestaltet sein. Mit Hilfe des Bediengeräts kann eine oder mehrere angezeigte Leuchten ausgewählt und bedient werden. Die Steuerung der Leuchten erfolgt dabei mit Hilfe des zentralen Steuergeräts gemäß einer Bedienung durch den Nutzer.

Die Druckschrift US 2015/0223309 A1 beschreibt ein System und Verfahren zum Übermitteln von Beacon-Signalen einer Gebäudebefestigung. Die Gebäudebefestigung kann einen Sensor aufweisen, um ein Sensorsignal zu erzeugen. Ein Controller kann das Sensorsignal empfangen und die Beacon-Signale mithilfe eines drahtlosen Senders an ein Netzwerk übertragen.

Die Druckschrift US 2015/0350820 A1 beschreibt einen zusätzlichen Beacon-Service für ein elektronisches Gerät. Das elektronische Gerät enthält ein Beacon-Modul zur Erkennung von einem Beacon-Signal und einen Prozessor. Der Prozessor kann ein übertragenes Beacon-Signal mittels einer Beacon-Schnittstelle erfassen und eine zusätzliche Informationen aus dem Beacon-Signal extrahieren und eine Ressource unter Verwendung der zusätzlichen Information abrufen. Die Ressource kann von mindestens einer Quelle des Beacon-Signals und einem Remote-Terminal über ein Netzwerk abgerufen werden. Bislang sind sogenannte Bluetooth-Smart-Sensoren von der Firma Blukii bekannt. Darüber hinaus sind in dem Buch von H.F. Rashvand et al.: "Distributed Sensor Systems", published online: 27. Februar 2012, ISBN: 9780470661246 verteilte Sensorsysteme in praktischen Anwendungen beschrieben.

Die Aufgabe der vorliegenden Erfindung besteht darin, die Konfiguration einer Bake beziehungsweise eines Beacon in oder an einer Leuchtvorrichtung für einen spezifischen Ort mit weniger Aufwand zu ermöglichen.

Erfindungsgemäß wird diese Aufgabe durch ein Beleuchtungssystem gemäß Anspruch 1 und ein Verfahren zum Konfigurieren einer Bake eines Beleuchtungssystems gemäß Anspruch 13 gelöst.

Ein erster Aspekt umfasst ein Beleuchtungssystem mit
- einer Leuchtvorrichtung und
- einer in oder an der Leuchtvorrichtung angeordneten Bake, wobei
- das Beleuchtungssystem eine Sensorvorrichtung zum Erfassen eines Umfeldparameters betreffend ein Umfeld des Beleuchtungssystems aufweist, und
- die Bake dazu ausgebildet ist, sich automatisch anhand des Umfeldparameters zu konfigurieren.

Das Beleuchtungssystem weist ein mobiles Endgerät auf. Das mobile Endgerät besitzt einen Sensor, wobei die Bake mit dem mobilen Endgerät in einer zweiten Kommunikationsverbindung steht und dazu ausgebildet ist, einen Wert des Sensors zu empfangen und sich damit automatisch selbst zu konfigurieren. Auf diese Weise kann die Bake auch Sensorwerte von mobilen Sensoren beziehungsweise Endgeräten für die Selbstkonfiguration nutzen.

Bei dem Selbstkonfigurieren der Bake werden mehrere Parameter der Bake eingestellt. Beispielsweise kann bei der Konfiguration ein Satz von Parametern, bestehend aus einer vorgegebenen Vielzahl an Parametern, neu eingestellt werden. Derartige Parameter sind beispielsweise Sendeintervalle, Signalstärke, Ausrichtung und dergleichen.

Ein Beleuchtungssystem besitzt demnach eine Leuchtvorrichtung und eine in oder an der Leuchtvorrichtung angeordnete Bake. Die Bake kann also beispielsweise von der Energieversorgung und/oder dem Kommunikationsnetz des Beleuchtungssystems profitieren. Außerdem weist das Beleuchtungssystem eine Sensorvorrichtung zum Erfassen eines Umfeldparameters betreffend ein Umfeld des Beleuchtungssystems auf. An einem spezifischen Ort, an dem die Bake installiert wird, kann die Sensorvorrichtung demnach einen Umfeldparameter (z.B. Luftfeuchtigkeit, Temperatur oder dergleichen) erfassen. Die Bake nutzt dann diesen erfassten Umfeldparameter automatisch zur Selbstkonfiguration. Damit ist es nicht mehr notwendig, die Bake manuell für bestimmte Umfeldbedingungen zu konfigurieren.

Vorzugsweise ist die Sensorvorrichtung dazu ausgelegt, zeitlich wiederkehrend einen jeweils aktuellen Wert des Umfeldparameters zu erfassen, und die Bake sollte dabei dazu ausgelegt sein, sich zeitlich wiederkehrend mit dem jeweils aktuellen Wert des Umfeldparameters zu konfigurieren. Auf diese Weise kann sich die Bake dynamisch an Umfeldänderungen anpassen, indem periodisch mit aktuellen Werten aus dem Umfeld Selbstkonfigurationen durchgeführt werden.

Bei einer weiteren vorteilhaften Ausgestaltung weist das Beleuchtungssystem mindestens eine weitere Leuchtvorrichtung und mindestens eine der weiteren Leuchtvorrichtung zugeordnete weitere Bake auf, wobei die beiden Baken in einer ersten Kommunikationsverbindung stehen und die weitere Bake dazu ausgebildet ist, einen Wert des Umfeldparameters über die erste Kommunikationsverbindung zu empfangen und sich damit zu konfigurieren. Somit kann beispielsweise ein Netz von Baken an jeweiligen Leuchtvorrichtungen realisiert werden, wobei nicht alle Baken mit eigener Umfeldsensorik ausgestattet sein müssen. Vielmehr kann eine einzige Sensorvorrichtung auch dazu verwendet werden, mehrere Baken mit einem Wert eines Umfeldparameters für die Selbstkonfiguration zu versorgen. Gegebenenfalls sind in dem Beleuchtungssystem auch mehrere Sensorvorrichtungen verteilt auf mehrere Leuchtvorrichtungen oder separat davon vorhanden, und die Werte der einzelnen Sensorvorrichtrungen werden den Baken zur Selbstkonfiguration über ein Kommunikationsnetz übermittelt.

Bei dem Beleuchtungssystem mit den mehreren Leuchtvorrichtungen und mehreren Baken ist es von Vorteil, wenn die Leuchtvorrichtungen und Baken über eine gemeinsame Kommunikationsvorrichtung verfügen, über die die erste Kommunikationsverbindung hergestellt ist. So können beispielsweise Baken die Kommunikationsverbindungen einer Lichtinstallation mit nutzen. Weiterhin kann das Beleuchtungssystem eine dritte Kommunikationsverbindung zu einer Sicherheitstechnikvorrichtung oder einer Gebäudetechnikvorrichtung besitzen, und die Bake kann dazu ausgebildet sein, einen Wert eines weiteren Umfeldparameters von der Sicherheitstechnikvorrichtung oder der Gebäudetechnikvorrichtung zu beziehen und sich damit selbst zu konfigurieren. Die eine Bake oder die mehreren Baken können also auch Werte aus anderen Systemen nutzen, um sich automatisch zu konfigurieren.

Bei einer speziellen Ausgestaltung kann vorgesehen sein, dass die Sensorvorrichtung nur über die Leuchtvorrichtung mit der Bake in Kommunikationsverbindung steht. Die Sensorvorrichtung hat dabei keine direkte Verbindung zu der Bake. Auf diese Weise kann beispielsweise eine bestehende Kommunikationsverbindung zwischen der Sensorvorrichtung und der Leuchtvorrichtung genutzt werden, um Sensorwerte zur Bake zu übermitteln.

Die Sensorvorrichtung kann direkt in oder an der Bake angeordnet sein. Damit können beispielsweise die Sensorvorrichtung und die Bake ein gemeinsames Gehäuse aufweisen.

Alternativ können die Sensorvorrichtung direkt mit der Bake und eine weitere Sensorvorrichtung nur über die Leuchtvorrichtung mit der Bake in Kommunikationsverbindung stehen, wobei auch ein Wert eines weiteren Umfeldparameters der weiteren Sensorvorrichtung für das Konfigurieren der Bake verwendet wird. Es werden damit nicht nur Sensordaten für die Bake verwertbar, die die Bake direkt von einer Sensorvorrichtung empfängt, sondern auch solche, die die Bake über eine Leuchtvorrichtung empfängt.

Besonders bevorzugt ist, wenn die Bake zum automatischen Konfigurieren ein Regelwerk aufweist, durch das mindestens eine Zuordnung eines Werts des Umfeldparameters zu einem vorgegebenen Wert eines Sendeparameters der Bake gegeben ist. Beim Konfigurieren kann dabei nicht nur der Wert eines Umfeldparameters geändert werden, sondern auch die Zuordnung in dem Regelwerk. Damit kann eine noch höhere Flexibilität erreicht werden.

Speziell kann das Regelwerk in Abhängigkeit von dem Umfeldparameter oder einem der Umfeldparameter automatisch durch das Konfigurieren veränderbar sein. Dies bedeutet, dass bei dem automatischen Konfigurieren auch ein automatisches Ändern des Regelwerks erfolgt.

Der Umfeldparameter oder einer der Umfeldparameter kann ausgewählt sein aus: Personenanzahl in einem Raum, Installationshöhe der Bake, Deckenabstand der Bake, Abstand der Bake zu anderen Baken, Anzahl von mit der Bake in Kommunikationsverbindung stehenden mobilen Endgeräten und Anzahl oder Größe von Metallobjekten in Sendereichweite der Bake. Anhand eines oder mehrerer dieser Umfeldparameter können bei dem Konfigurieren einer oder mehrerer der folgenden Parameter der Bake verändert werden: Sendeintervall, Signalstärke, ID-Nummer, Richtung des Signals, Verschlüsselungsparameter, Aktivierungszustand einer Kommunikationsschnittstelle oder Versorgungsschnittstelle und Zugriffsberechtigung. Es ergibt sich damit eine hohe Variationsvielfalt beim automatischen Selbstkonfigurieren.

Die oben formulierte Aufgabe lässt sich erfindungsgemäß auch lösen durch ein Verfahren zum Konfigurieren einer Bake eines Beleuchtungssystems, das eine Leuchtvorrichtung und in oder an der Leuchtvorrichtung die Bake aufweist, durch
- Erfassen eines Umfeldparameters betreffend ein Umfeld des Beleuchtungssystems, und
- automatisches Selbstkonfigurieren der Bake anhand des Umfeldparameters.

In vorteilhafter Weise wird also auch ein Verfahren zur Selbstkonfiguration einer oder mehrerer Baken bereitgestellt, indem ein Umfeldparameter des Umfelds des Beleuchtungssystems erfasst wird, anhand dessen das automatische Selbstkonfigurieren erfolgt.

Die oben im Zusammenhang mit dem erfindungsgemäßen Beleuchtungssystem geschilderten funktionellen Merkmale können auch als Verfahrensmerkmale des erfindungsgemäßen Verfahrens zum Konfigurieren einer Bake betrachtet werden.

Die vorliegende Erfindung wird nun anhand der beigefügten Zeichnungen näher erläutert, in denen zeigen:
- Fig. 1: ein schematisches Diagramm zum Aufbau eines erfindungsgemäßen Beleuchtungssystems mit Peripherie;
- Fig. 2: einen schematischen Aufbau eines alternativen Beleuchtungssystems; und
- Fig. 3: den schematischen Aufbau einer weiteren Ausführungsvariante eines erfindungsgemäßen Beleuchtungssystems.

Die nachfolgend näher geschilderten Ausführungsbeispiele stellen bevorzugte Aspekte der vorliegenden Erfindung dar.

Ein beispielhaftes Beleuchtungssystem besitzt neben der eigentlichen Leuchtvorrichtung mindestens eine in oder an der Leuchtvorrichtung angeordnete Bake (nachfolgend auch Beacon genannt). Daneben besitzt das Beleuchtungssystem eine Sensorvorrichtung zum Erfassen eines Umfeldparameters betreffend ein Umfeld des Beleuchtungssystems. Diese Sensorvorrichtung kann beispielsweise einen oder mehrere Temperatursensoren oder Abstandssensoren aufweisen. Sie können am oder im Beacon angeordnet sein oder Teil davon sein. Alternativ kann die Sensorvorrichtung beziehungsweise können die Sensoren auch in oder an einer Lichtinstallation beziehungsweise einem Beleuchtungssystem angebracht beziehungsweise Teil davon sein. Ebenso kann die Sensorvorrichtung Teil einer Lichtsteuerung sein.

Für die Anordnung beziehungsweise Unterbringung der Sensorik im gesamten Beleuchtungssystem existieren verschiedene Varianten (alternativ und kumulativ):
- als separates Systemelement, das innerhalb der Lichtinstallation/Leuchte beziehungsweise Leuchtvorrichtung montiert wird, z.B. am Gehäuse der Leuchte,
- als Systemelement in/an dem Beacon beziehungsweise als Teil des Beacon, z.B. als elektronisches Bauelement oder elektronische Baugruppe auf der Platine des Beacon,
- als Systemelement in/an der Lichtsteuerung oder als Teil der Lichtsteuerung, z.B. als elektronisches Bauelement oder elektronische Baugruppe auf der Platine des Vorschaltgeräts der Leuchte,
- im Gehäuse der Lichtinstallation beziehungsweise Leuchtvorrichtung integriert und insbesondere als Systemelement innerhalb eines vorgesehenen Bauraums des Gehäuses integriert,
- am Gehäuse des elektronischen Vorschaltgeräts,
- auf einer LED-Platine der Lichtinstallation,
- im vorgesehenen Bauraum des Starter-Moduls bei Gehäusen, die für konventionelle Leuchtstoffröhren vorgesehen sind und aufgrund einer anderen Technologie nicht mehr benötigt werden,
- in/an einem Energiespeicher oder als Teil eines Energiespeichers, z.B. eines Akkumulators (Temperatursensor) des Gesamtsystems,
- in der Halterung/dem Sockel der Lichtinstallation (z.B. Stromschiene),
- als LED, die gleichzeitig als Sensor genutzt werden kann, und
- als Sensor mit integriertem Wandler und/oder Konverter, z.B. zur Bereitstellung der vom Beacon benötigten Energie-Parameter als Teil des Gesamtsystems.

Die Bake beziehungsweise das Beacon ist ausgebildet zur Selbstkonfiguration beziehungsweise automatischen Konfiguration, das heißt zur Einstellung der Beacon-Parameter auf Basis von Sensorinformationen und/oder dazu hinterlegter Routinen, z.B. durch die Integration von Abstandssensorik zur Messung der Installationshöhe oder dem Abstand der Decke oder dem Abstand zu anderen Beacons. Die Abstände können beispielsweise sensiert werden, und der Beacon konfiguriert sich daraufhin individuell.

Beispielsweise kann eine Routine für einen zeitlich wiederkehrenden Ablauf (beispielsweise alle 10 Minuten) bestehen, in dem die Sensordaten abgefragt und ausgewertet werden. Dabei werden die Sensordaten unter anderem dem/den anzusteuernden Beacon/Sender(n) in/an oder als Teil der Lichtinstallation oder einer Lichtinstallation im Umfeld informationstechnisch (relational) zugeordnet. Hieraus resultiert ein Umfeldprofil, welches z.B. die Installationshöhe, die Anzahl der Personen im Umfeld als näherungsweise Information über die Signaldämpfung oder die Luftfeuchtigkeit umfasst. Darauf aufbauend kann mit einem hinterlegten Regelwerk (d.h. einer Zuordnungsvorschrift zur Zuordnung beispielsweise eines Umfeldparameters zu einem Sendeintervall, einer Signalstärke und/oder einer Ausrichtung) beziehungsweise definierten Vorgaben eine Konfiguration beziehungsweise ein Konfigurationsprofil abgeleitet werden (Beispiel: Wenn Deckenhöhe X[mm], dann Signalstärke auf Y[mW] einstellen; wenn relative Luftfeuchtigkeit Z[%], dann Signalstärke *1,2).

Im Falle einer begrenzten Speicherkapazität kann das Ist-Umfeldprofil mit vorab gespeicherten beziehungsweise erwarteten Profilen verglichen werden, für die ein Konfigurationsprofil eingestellt ist. Anschließend kann das Umfeldprofil und das damit verknüpfte Konfigurationsprofil mit der geringsten Abweichung (auf Basis der Sensorinformationen und der Auswertung) eingestellt werden.

Das Konfigurationsprofil umfasst z.B. Beacon-Parameter wie Sendeintervall, Signalstärke, ID-Nummer, Richtung des Signals, Verschlüsselungsparameter, Kommunikations- oder Power-Schnittstellen aktivieren oder Zugriffskontrolle.

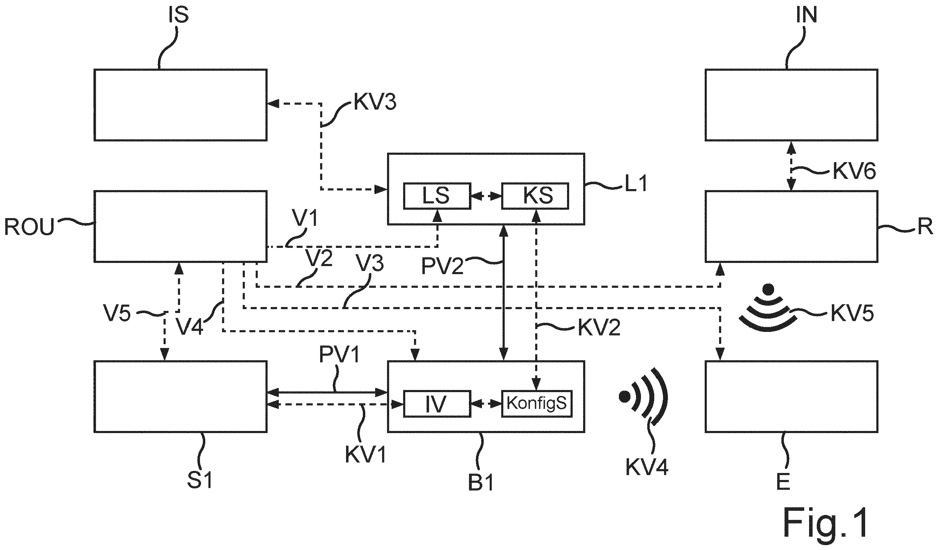

Eine Routine zur Konfiguration der Beacon-Parameter, also zur Selbstkonfiguration, kann an unterschiedlichen Stellen hinterlegt sein (vergleiche Fig. 1):
Variante V1: Konfigurationsprofile sind hinterlegt auf der Informationsverarbeitung der Lichtinstallation, z.B. in der Leuchtvorrichtung,
Variante V2: Separates Konfigurationsgerät, z.B. Router,
Variante V3: Konfigurationsprofile sind hinterlegt auf dem Endgerät,
Variante V4: Konfigurationsprofile sind hinterlegt auf dem Mikrocontroller des Beacon oder auf der Speichereinheit des Beacon, und
Variante V5: Separates Konfigurationsgerät, z.B. in dem Sensorsystem.

Darüber hinaus kann auch eine Konfiguration anderer (Nachbar-)Beacons im Umfeld des Systems erfolgen, die ebenfalls im/an oder Teil einer Lichtinstallation sind, und zu denen eine Kommunikationsverbindung (z.B. über die periphere Infrastruktur des Gebäudes oder eine drahtlose Kommunikationsverbindung zwischen den Beacons besteht auf Basis der Sensordaten und der hiermit verknüpften Routinen. So erfasst die Sensorik Parameter eines anderen Beacon im Umfeld (zum Beispiel Feldstärke), und anschließend werden die Parameter dieses Beacon in/an der anderen Lichtinstallation automatisch konfiguriert.

Entsprechend einem ersten Konzept, das in Fig. 1 wiedergegeben ist, ist ein Sensor S1 (z.B. Präsenzmelder, Bildverarbeitungssystem, MAC-Adressendetektor, SDK- und APT-Detektor oder Abstandssensor) an/in einer Bake beziehungsweise einem Beacon B1 angeordnet oder ein Teil des Beacon B1. Zwischen dem Sensor S1 und dem Beacon B1 besteht eine Kommunikationsverbindung KV1 und eine physische Verbindung PV1. Das Beacon B1 besitzt eine Informationsverarbeitungseinheit IV, mit der sich das Beacon B1 unter anderem selbst konfigurieren kann. Der Sensor S1 kann unter Umständen direkt mit der Informationsverarbeitungseinheit IV über die Kommunikationsschnittstelle KV1 kommunizieren. Weiterhin weist das Beacon B1 eine Konfigurationsschnittstelle KonfigS auf, die mit der Informationsverarbeitungseinheit IV in Verbindung steht.

Das Beacon B1 ist im vorliegenden Beispiel in oder an einer Leuchtvorrichtung L1 oder einer anderen Komponente einer Lichtinstallation gemäß einer physischen Verbindung PV2 angeordnet. Die Leuchtvorrichtung L1 besitzt eine Lichtsteuerung LS und in Verbindung damit eine Kommunikationsschnittstelle KS. Letztere steht mit der Konfigurationsschnittstelle KonfigS des Beacon B1 in Kommunikationsverbindung KV2.

Die Leuchtvorrichtung L1 und insbesondere die Lichtsteuerung LS steht mit einer peripheren Infrastruktur IS eines Gebäudes (z.B. Gebäudemanagement oder zentraler Diensteserver) in Kommunikationsverbindung KV3.

Weiterhin steht das Beacon B1 in drahtloser Kommunikationsverbindung KV4 mit einem Endgerät E (z.B. Smart-Device). Diese Kommunikationsverbindung KV4 erfolgt vorzugsweise über den BLE-Standard. Des Weiteren steht das Endgerät E mit einem Router R beispielsweise mittels WiFi in drahtloser Kommunikationsverbindung KV5. Zwischen dem Router R und einer Infrastruktur IN für Dienste (z.B. Internet oder zentraler Diensteserver) besteht eine Kommunikationsverbindung KV6.

Eine Routine zur Konfiguration der Beacon-Parameter auf der Basis von Sensordaten des Sensors S1, der einen Umfeldparameter des Beacon B1 beziehungsweise der Leuchtvorrichtung L1 erfasst, erfolgt beispielsweise mithilfe eines Konfigurationsprofils. Mithilfe eines solchen Konfigurationsprofils lassen sich ein oder mehrere Parameter des Beacon B1 einstellen. Ein solches Konfigurationsprofil besitzt eine oder mehrere Eingangsgrößen. Die Zuordnung einer Eingangsgröße zu einer Ausgangsgröße des Konfigurationsprofils kann beispielsweise mithilfe eines Regelwerks erfolgen. So kann beispielsweise ein Konfigurationsprofil lauten: "Nebenansender ist ausgefallen, folglich ist Signalintensität um einen vorgegebenen Wert zu erhöhen" und gleichzeitig "Raum ist leer, folglich ist Signalintensität um einen weiteren vorgegebenen Wert zu reduzieren".

Die Einstellung der Parameter beziehungsweise die Konfiguration erfolgt automatisch auf Basis von Daten des Sensors S1 beziehungsweise des Sensorsystems zur Datenerfassung beispielsweise der Raumbedingungen und/oder signalausbreitungs- und signalabdeckungsrelevanten Einflussfaktoren. Solche signalbeeinflussenden Faktoren können neben den genannten Präsenzmeldern, Abstandssensoren et cetera auch Personenzähler und Höhenmesser sein.

Eine Routine zur Konfiguration der Beacon-Parameter kann an unterschiedlichen Stellen des Beleuchtungssystems hinterlegt sein. Fig. 1 zeigt hierzu einige Varianten V1 bis V5, die oben bereits genannt wurden. Dementsprechend ist gemäß Variante V1 eine Routine mit einem oder mehreren Konfigurationsprofilen auf der Informationsverarbeitung der Lichtinstallation (z.B. elektrisches Vorschaltgerät der Leuchtvorrichtung L1) hinterlegt. Entsprechend einer Variante V2 ist eine Routine auf einem separaten Konfigurationsgerät, hier dem Router R, hinterlegt. Gemäß Variante V3 ist eine Routine mit einem oder mehreren Konfigurationsprofilen auf dem Endgerät E hinterlegt. Schließlich kann eine Routine auch auf dem Mikrocontroller des Beacon B1 oder auf der Speichereinheit des Beacon B1, also in dessen Informationsverarbeitung IV, oder gemäß Variante V5 in einem separaten Konfigurationsgerät, nämlich dem Sensorsystem beziehungsweise dem Sensor S1, hinterlegt sein.

Nicht nur für eine erste Konfiguration, sondern auch für eine Rekonfiguration des Beacon B1 können Umfeldbedingungen (z.B. Personenanzahl, Installationshöhe, Deckenabstand, Abstand zu anderen Beacons, Anzahl Endgeräte, Metallobjekte und so weiter) erfasst und entsprechende Parameter (z.B. Sendeintervall, Signalstärke, ID-Nummer, Richtung des Signals, Verschlüsselungsparameter, Kommunikations- oder Power-Schnittstellen aktivieren oder Zugriffskontrolle) eingestellt werden.

Entsprechend eines alternativen zweiten Konzepts befindet sich der Sensor S1 nicht an/in dem Beacon B1, sondern an/in der Leuchtvorrichtung L1 und steht ebenso mit dieser in Kommunikationsverbindung und nicht mit dem Beacon B1.

Gemäß einem dritten Konzept ist in dem Beleuchtungssystem sowohl der erste Sensor S1 vorgesehen, der in Kommunikationsverbindung KV1 und in physischer Verbindung PV1 mit dem Beacon B1 steht, als auch der Sensor vom zweiten Konzept, der mit der Leuchtvorrichtung L1 in Kommunikationsverbindung und in physischer Verbindung steht.

Entsprechend einem vierten Konzept ist der Sensor S1 wie in dem ersten Konzept in physischer Verbindung PV1 mit dem Beacon B1 vorgesehen, aber die Kommunikationsverbindung vom Sensor S1 erfolgt zur Lichtsteuerung LS der Leuchtvorrichtung L1 und nicht zum Beacon B1. Zwischen Sensor S1 und Beacon B1 besteht also nur eine indirekte Kommunikationsverbindung über die Kommunikationsschnittstelle KS der Leuchtvorrichtung L1 und der Konfigurationsschnittstelle KonfigS des Beacon B1.

Im Falle, dass die Sensorik an/in der Lichtinstallation montiert ist, können die Sensordaten, die zur Konfiguration des Beacon benötigt werden, z.B. über die Kommunikationstechnik der Lichtinstallation zum Beacon geleitet werden. Auch könnte die Informationsverarbeitung der Lichtsteuerung LS zur Auswertung der Sensordaten genutzt werden.

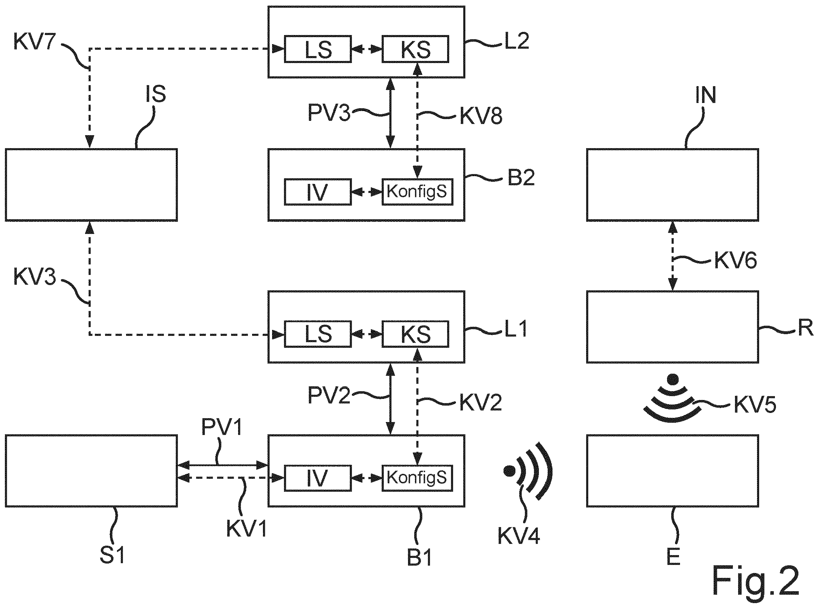

In einem weiteren Ausführungsbeispiel gemäß Fig. 2 ist das Beleuchtungssystem von Fig. 1 um eine weitere Leuchtvorrichtung L2 erweitert, die selbst eine eigene Lichtsteuerung LS und eine Kommunikationsschnittstelle KS aufweist. Letztere stehen miteinander in Verbindung. Die Lichtsteuerung LS steht außerdem in Kommunikationsverbindung KV7 mit der peripheren Infrastruktur IS des Gebäudes. Weiterhin ist in oder an der Leuchtvorrichtung in physischer Verbindung PV3 eine zweite Bake beziehungsweise ein zweites Beacon B2 angeordnet. Auch dieses Beacon B2 besitzt eine Informationsverarbeitung IV in Verbindung mit einer Konfigurationsschnittstelle KonfigS. Letztere steht in Kommunikationsverbindung KV8 mit der Kommunikationsschnittstelle KS der weiteren Leuchtvorrichtung L2.

Dieses fünfte Konzept thematisiert ebenso wie das erste Konzept gemäß Fig. 1 die Anordnung des Sensors S1 in/an dem oder als Teil des Beacon B1. Zwischen Sensor S1 und Beacon B1 bestehen eine Kommunikationsverbindung KV1 sowie eine physische Verbindung PV1. Darüber hinaus besteht über die periphere Infrastruktur IS des Gebäudes eine Kommunikationsverbindung KV7 zu mindestens einer weiteren Lichtinstallation beziehungsweise Leuchtvorrichtung L2 mit integriertem Beacon B2. In dem skizzierten Konzept erfasst demnach der Sensor S1 Parameter (z.B. Feldstärke) an dem ersten Beacon B1 und anschließend werden die Parameter dieses Beacon B1 und gegebenenfalls auch die Parameter des Beacon B2 der anderen Leuchtvorrichtung über entsprechende Routinen im Rahmen einer Selbstkonfiguration geändert.

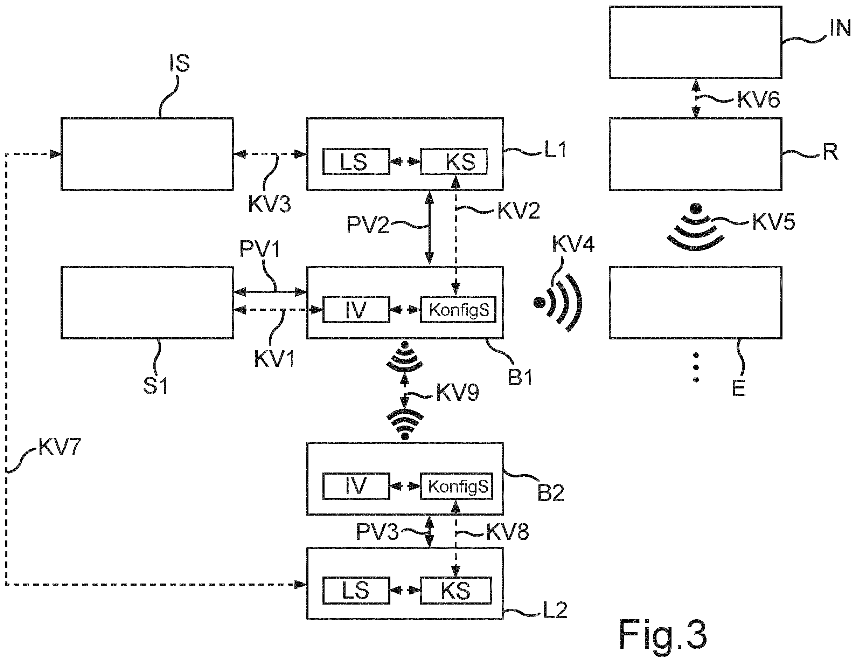

Ein sechstes Konzept gemäß Fig. 3 entspricht strukturell in etwa dem fünften Konzept von Fig. 2. Auch hier sind eine zweite Leuchtvorrichtung L2 und ein zweites Beacon B2 vorgesehen. Entsprechend diesem sechsten Konzept besteht jedoch eine direkte drahtlose Kommunikationsverbindung KV9 zwischen dem ersten Beacon B1 und dem zweiten Beacon B2. Umfeldparameterwerte oder Konfigurationsinformationen für die automatische Selbstkonfiguration können also direkt von Beacon zu Beacon übertragen werden. Vorzugsweise erfolgt eine intelligente Datenreduktion von Sensordaten durch die Verarbeitung im jeweiligen Beacon oder durch die informationsverarbeitenden Elemente der Lichtinstallation L1 beziehungsweise L2. Danach erfolgt eine Weitergabe z.B. an andere Beacons oder an das Lichtmanagementsystem beispielsweise über ein Beacon-Kommunikationsnetz oder das Netzwerk der Lichtinstallation.

Hier wie auch bei den anderen Konzepten kann eine Umfelderfassung durch vernetzte Sensoren, d.h. Nutzung von Sensorinformationen (Beschleunigung, Temperatur et cetera) des Endgeräts beziehungsweise der Endgeräte erfolgen. Anschließend kann eine Kommunikation zu einer Sende-/Empfangseinheit des Beacon/der Lichtinstallation (beispielsweise Endgerät als lichtsteuerndes Element) durchgeführt werden. Ferner kann auch hier eine Nutzung weiterer Sensordaten, die beispielsweise über das Kommunikationsnetz des Lichtmanagement-Systems zusammengeführt werden, z.B. durch Elemente der Sicherheitstechnik/Gebäudetechnik (z.B. Rauchmelder, Feuermelder, Türen) erfolgen. Dies kann insbesondere im Hinblick auf eine Gefahrensituation oder ein Evakuierungsszenario von Bedeutung sein.

Bei sämtlichen Ausführungsformen sind Energieschnittstellen von den Beacons zur jeweiligen Lichtinstallation beziehungsweise Leuchtvorrichtung L1, L2 vorgesehen. Solche Energieschnittstellen können mit den mechanischen Schnittstellen oder Kommunikationsschnittstellen kombiniert sein.

In vorteilhafter Weise resultiert die optimale Selbstkonfiguration des Beacon auf Basis von Umfeld-Sensordaten und vordefinierten Konfigurationsprofilen in einem minimalen Aufwand bei der Installation der Beacon-Leuchte sowohl für den Betreiber (z.B. Besitzer eines Supermarkts) als auch für den Installateur der Leuchten. Für die Installation ist gegebenenfalls kein im Umgang mit Beacons geschultes Personal erforderlich.

Ein weiterer Vorteil besteht darin, dass gegebenenfalls notwendige Nachkonfigurationen bei geänderten Raumsituationen vollständig entfallen können. Außerdem können Fehleinstellungen von Beacon-Parametern, insbesondere Sendeintervall und Signalstärke, und sich dadurch ergebende schlechte Dienst-Abdeckungen vermieden werden. Dadurch, dass das Beacon-Signal an die Gegebenheiten beziehungsweise an bestimmte Parameter angepasst wird, kann eine gewünschte Qualität des damit verbundenen Dienstes (Ortung, Kontent) geliefert werden (Genauigkeit der Ortung verbessern; ungewünschte Signallücken minimieren beziehungsweise optimieren; ungewünschte Service-Ausfälle vermeiden). Auch kann der Einfluss von z.B. Menschen im Umfeld der Installation auf die Signalqualität beziehungsweise Signalausbreitung und -abdeckung minimiert werden. Damit können Qualitätsschwankungen ausgeglichen werden.

### Bezugszeichenliste

- B1, B2: Beacon
- E: Endgerät
- IN: Infrastruktur
- IS: periphere Infrastruktur
- IV: Informationsverarbeitungseinheit
- KS: Kommunikationsschnittstelle
- KV1-KV9: Kommunikationsverbindung
- L1, L2: Leuchtvorrichtung
- LS: Lichtsteuerung
- PV1-PV3: physische Verbindung
- R: Router
- S1: Sensor

## Patentansprüche

1. Beleuchtungssystem mit
- einer Leuchtvorrichtung (L1),
- einer in oder an der Leuchtvorrichtung (L1) angeordneten Bake (B1),
- einer Energieschnittstelle von der Bake (B1) zur Leuchtvorrichtung (L1), wodurch ein permanenter Energiezugang bereitstellt ist, um die Bake (B1) mit Energie zu versorgen,
- einer Sensorvorrichtung (S1) zum Erfassen eines Umfeldparameters betreffend ein Umfeld des Beleuchtungssystems, wobei die Bake (B1) mit der Sensorvorrichtung (S1) in einer ersten Kommunikationsverbindung (KV1) steht, und
- einem mobilen Endgerät (E), wobei das mobile Endgerät (E) einen Sensor besitzt, wobei die Bake (B1) mit dem mobilen Endgerät (E) in einer zweiten Kommunikationsverbindung (KV4) steht,
**dadurch gekennzeichnet, dass**
die Bake (B1) dazu ausgebildet ist,
- einen Wert des Sensors zu empfangen und sich damit sowie anhand des Umfeldparameters automatisch selbst zu konfigurieren, wobei bei dem Selbstkonfigurieren der Bake (B1) mehrere Parameter der Bake (B1) eingestellt werden.

2. Beleuchtungssystem nach Anspruch 1, wobei die Sensorvorrichtung (S1) dazu ausgelegt ist, zeitlich wiederkehrend einen jeweils aktuellen Wert des Umfeldparameters zu erfassen, und die Bake (B1) dazu ausgelegt ist, sich zeitlich wiederkehrend mit dem jeweils aktuellen Wert des Umfeldparameters zu konfigurieren.

3. Beleuchtungssystem nach einem der vorhergehenden Ansprüche, das mindestens eine weitere Leuchtvorrichtung (L2) und mindestens eine der weiteren Leuchtvorrichtung (L2) zugeordnete weitere Bake (B2) aufweist, die beiden Baken (B1, B2) in einer ersten Kommunikationsverbindung (KV9) stehen und die weitere Bake (B2) dazu ausgebildet ist, einen Wert des Umfeldparameters über die erste Kommunikationsverbindung (KV9) zu empfangen und sich damit zu konfigurieren.

4. Beleuchtungssystem nach Anspruch 3, wobei die beiden Leuchtvorrichtungen (L1, L2) und die beiden Baken (B1, B2) über eine gemeinsame Kommunikationsvorrichtung verfügen, über die die erste Kommunikationsverbindung (KV9) hergestellt ist.

5. Beleuchtungssystem nach einem der vorhergehenden Ansprüche, das eine dritte Kommunikationsverbindung (KV3) zu einer Sicherheitstechnikvorrichtung oder einer Gebäudetechnikvorrichtung (IS) besitzt, und die Bake (B1) dazu ausgebildet ist, einen Wert eines weiteren Umfeldparameters von der Sicherheitstechnikvorrichtung oder der Gebäudetechnikvorrichtung (IS) zu beziehen und sich damit selbst zu konfigurieren.

6. Beleuchtungssystem nach einem der vorhergehenden Ansprüche, wobei die Sensorvorrichtung (S1) nur über die Leuchtvorrichtung (L1) mit der Bake (B1) in Kommunikationsverbindung steht.

7. Beleuchtungssystem nach einem der vorhergehenden Ansprüche, wobei die Sensorvorrichtung (S1) direkt in oder an der Bake (B1) angeordnet (PV1) ist.

8. Beleuchtungssystem nach einem der Ansprüche 1 bis 5, wobei die Sensorvorrichtung (S1) direkt mit der Bake (B1) und eine weitere Sensorvorrichtung nur über die Leuchtvorrichtung (L1) mit der Bake (B1) in Kommunikationsverbindung steht, und wobei auch ein Wert eines weiteren Umfeldparameters der weiteren Sensorvorrichtung für das Konfigurieren der Bake (B1) verwendet wird.

9. Beleuchtungssystem nach einem der vorhergehenden Ansprüche, wobei die Bake (B1) zum automatischen Konfigurieren ein Regelwerk aufweist, durch das mindestens eine Zuordnung eines Wertes des Umfeldparameters zu einem vorgegebenen Wert eines Sendeparameters der Bake (B1) gegeben ist.

10. Beleuchtungssystem nach Anspruch 9, wobei das Regelwerk in Abhängigkeit von dem Umfeldparameter oder einem der weiteren Umfeldparameter automatisch durch das Konfigurieren veränderbar ist.

11. Beleuchtungssystem nach einem der vorhergehenden Ansprüche, wobei der Umfeldparameter oder einer der weiteren Umfeldparameter ausgewählt ist aus: Personenanzahl in einem Raum, Installationshöhe der Bake (B1), Deckenabstand der Bake (B1), Abstand der Bake (B1) zu anderen Baken, Anzahl von mit der Bake (B1) in Kommunikationsverbindung (KV4) stehenden mobilen Endgeräten (E) und Anzahl oder Größe von Metallobjekten in Sendereichweite der Bake (B1).

12. Beleuchtungssystem nach einem der vorhergehenden Ansprüche, wobei durch das Konfigurieren einer oder mehrere der folgenden Parameter der Bake (B1) veränderbar sind: Sendeintervall, Signalstärke, ID-Nummer, Richtung des Signals, Verschlüsselungsparameter, Aktivierungszustand einer Kommunikationsschnittstelle oder Versorgungsschnittstelle und Zugriffsberechtigung.

13. Verfahren zum Konfigurieren einer Bake (B1) eines Beleuchtungssystems, das aufweist:
- eine Leuchtvorrichtung (L1),
- die Bake (B1) in oder an der Leuchtvorrichtung (L1),
- eine Energieschnittstelle von der Bake (B1) zur Leuchtvorrichtung (L1), wodurch ein permanenter Energiezugang bereitstellt wird, um die Bake (B1) mit Energie zu versorgen,
- eine Sensorvorrichtung (S1), wobei die Bake (B1) mit der Sensorvorrichtung (S1) in einer ersten Kommunikationsverbindung (KV1) steht, und
- ein mobiles Endgerät (E), wobei das mobile Endgerät (E) einen Sensor besitzt und die Bake (B1) mit dem mobilen Endgerät (E) in einer zweiten Kommunikationsverbindung (KV4) steht,
und folgender Schritt ausgeführt wird:
- Erfassen, durch die Sensorvorrichtung (S1), eines Umfeldparameters betreffend ein Umfeld des 15 Beleuchtungssystems,
**gekennzeichnet durch**
- Empfangen, durch die Bake (B1), eines Werts des Sensors und
- automatisches Selbstkonfigurieren der Bake (B1) anhand des Umfeldparameters und mittels des Werts des Sensors, wobei bei dem Selbstkonfigurieren der Bake (B1) mehrere Parameter der Bake (B1) eingestellt werden.

## Claims

1. A lighting system comprising
- a lighting device (L1),
- a beacon (B1) arranged in or at the lighting device (L1),
- an energy interface from the beacon (B1) to the lighting device (L1), whereby a permanent energy access is provided to supply the beacon (B1) with energy,
- a sensor device (S1) for acquiring an environmental parameter relating to an environment of the lighting system, wherein the beacon (B1) is in a first communication link (KV1) with the sensor device (S1), and
- a mobile terminal (E), wherein the mobile terminal (E) comprises a sensor, wherein the beacon (B1) is in a second communication link (KV4) with the mobile terminal (E),
**characterized in that**
- the beacon (B1) is formed
- to receive a value of the sensor and to automatically configure itself therewith as well as based on the environmental parameter, wherein multiple parameters of the beacon (B1) are adjusted in the self-configuration of the beacon (B1).

2. The lighting system according to claim 1, wherein the sensor device (S1) is adapted to acquire a respectively current value of the environmental parameter in a temporarily recurrent manner, and the beacon (B1) is adapted to configure itself with the respectively current value of the environmental parameter in the temporarily recurrent manner.

3. The lighting system according to any one of the preceding claims, which comprises at least one further lighting device (L2) and at least one further beacon (B2) associated with the further lighting device (L2), the two beacons (B1, B2) are in a first communication link (KV9) and the further beacon (B2) is formed to receive a value of the environmental parameter via the first communication link (KV9) and to configure itself therewith.

4. The lighting system according to claim 3, wherein the two lighting devices (L1, L2) and the two beacons (B1, B2) have a common communication device, via which the first communication link (KV9) is established.

5. The lighting system according to any one of the preceding claims, which comprises a third communication link (KV3) with a safety technology device or a building technology device (IS), and the beacon (B1) is formed to obtain a value of a further environmental parameter from the safety technology device or the building technology device (IS) and to configure itself therewith.

6. The lighting system according to any one of the preceding claims, wherein the sensor device (S1) is in communication link with the beacon (B1) only via the lighting device (L1).

7. The lighting system according to any one of the preceding claims, wherein the sensor device (S1) is arranged (PV1) directly in or at the beacon (B1).

8. The lighting system according to any one of claims 1 to 5, wherein the sensor device (S1) is in communication link directly with the beacon (B1) and a further sensor device is in communication link with the beacon (B1) only via the lighting device (L1), and wherein a value of a further environmental parameter of the further sensor device is also used for configuring the beacon (B1).

9. The lighting system according to any one of the preceding claims, wherein the beacon (B1) comprises a set of rules for automatically configuring, by which at least one association of a value of the environmental parameter with a preset value of a transmitting parameter of the beacon (B1) is given.

10. The lighting system according to claim 9, wherein the set of rules is automatically variable by the configuration depending on the environmental parameter or one of the further environmental parameters.

11. The lighting system according to any one of the preceding claims, wherein the environmental parameter or one of the further environmental parameters is selected from: number of persons in a room, installation height of the beacon (B1), ceiling distance of the beacon (B1), distance of the beacon (B1) to other beacons, number of mobile terminals (E) in communication link (KV4) with the beacon (B1) and number or size of metallic objects in transmitting range of the beacon (B1).

12. The lighting system according to any one of the preceding claims, wherein one or more of the following parameters of the beacon (B1) are variable by the configuration: transmitting interval, signal strength, ID number, direction of the signal, encryption parameter, activation state of a communication interface or supply interface and access authorization.

13. A method for configuring a beacon (B1) of a lighting system, which comprises:
- a lighting device (L1),
- the beacon (B1) in or at the lighting device (L1),
- an energy interface from the beacon (B1) to the lighting device (L1), whereby a permanent energy access is provided to supply the beacon (B1) with energy,
- a sensor device (S1), wherein the beacon (B1) is in a first communication link (KV1) with the sensor device (S1), and
- a mobile terminal (E), wherein the mobile terminal (E) comprises a sensor and the beacon (B1) is in a second communication link (KV4) with the mobile terminal (E),
and the following step is executed:
- acquiring an environmental parameter relating to an environment of the lighting system by the sensor device (S1),
**characterized by**
- receiving a value of the sensor by the beacon (B1), and
- automatically self-configuring the beacon (B1) based on the environmental parameter and by means of the value of the sensor, wherein multiple parameters of the beacon (B1) are adjusted in the self-configuration of the beacon (B1).

## Revendications

1. Système d'éclairage, comprenant
- un dispositif lumineux (L1),
- une balise (B1) disposée dans ou sur le dispositif lumineux (L1),
- une interface d'énergie de la balise (B1) vers le dispositif lumineux (L1), moyennant quoi un accès d'énergie permanent est mis à disposition afin d'alimenter la balise (B1) avec de l'énergie,
- un dispositif détecteur (S1) destiné à acquérir un paramètre d'environnement concernant un environnement du système d'éclairage, la balise (B1) se trouvant dans une première liaison de communication (KV1) avec le dispositif détecteur (S1), et
- un terminal mobile (E), le terminal mobile (E) possédant un capteur, la balise (B1) se trouvant dans une deuxième liaison de communication (KV4) avec le terminal mobile (E),
**caractérisé en ce que** la balise (B1) est configurée pour
- recevoir une valeur du capteur et se configurer automatiquement elle-même avec celle-ci ainsi qu'à l'aide du paramètre d'environnement, plusieurs paramètres de la balise (B1) étant réglés lors de l'autoconfiguration de la balise (B1).

2. Système d'éclairage selon la revendication 1, le dispositif détecteur (S1) étant conçu pour acquérir de manière temporellement récurrente une valeur respectivement actuelle du paramètre d'environnement, et la balise (B1) est conçue pour se configurer de manière temporellement récurrente avec la valeur respectivement actuelle du paramètre d'environnement.

3. Système d'éclairage selon l'une des revendications précédentes, qui possède au moins un dispositif lumineux supplémentaire (L2) et au moins une balise supplémentaire (B2) associée au dispositif lumineux supplémentaire (L2), les deux balises (B1, B2) se trouvant dans une première liaison de communication (KV9) et la balise supplémentaire (B2) étant configurée pour recevoir une valeur du paramètre d'environnement par le biais de la première liaison de communication (KV9) et se configurer avec celle-ci.

4. Système d'éclairage selon la revendication 3, les deux dispositifs lumineux (L1, L2) et les deux balises (B1, B2) disposant d'un dispositif de communication commun par le biais duquel est établie la première liaison de communication (KV9).

5. Système d'éclairage selon l'une des revendications précédentes, qui possède une troisième Système d'éclairage selon l'une des revendications précédentes, qui possède (KV3) vers un dispositif technique de sécurité ou un dispositif technique de bâtiment (IS), et la balise (B1) est configurée pour obtenir une valeur d'un paramètre d'environnement supplémentaire de la part du dispositif technique de sécurité ou du dispositif technique de bâtiment (IS) et se configurer elle-même avec celle-ci.

6. Système d'éclairage selon l'une des revendications précédentes, le dispositif détecteur (S1) ne se trouvant en liaison de communication avec la balise (B1) que par le biais du dispositif lumineux (L1).

7. Système d'éclairage selon l'une des revendications précédentes, le dispositif détecteur (S1) étant disposé (PV1) directement dans ou sur la balise (B1).

8. Système d'éclairage selon l'une des revendications 1 à 5, le dispositif détecteur (S1) se trouvant en liaison de communication directement avec la balise (B1) et un dispositif détecteur supplémentaire avec la balise (B1) seulement par le biais du dispositif lumineux (L1), et une valeur d'un paramètre d'environnement supplémentaire du dispositif détecteur supplémentaire étant également utilisée pour la configuration de la balise (B1).

9. Système d'éclairage selon l'une des revendications précédentes, la balise (B1) possédant, pour la configuration automatique, un ensemble de règles par lequel au moins une attribution d'une valeur du paramètre d'environnement est donnée à une valeur prédéfinie d'un paramètre d'émission de la balise (B1).

10. Système d'éclairage selon la revendication 9, l'ensemble de règles pouvant être modifié automatiquement par la configuration en fonction du paramètre d'environnement ou de l'un des paramètres d'environnement supplémentaires.

11. Système d'éclairage selon l'une des revendications précédentes, le paramètre d'environnement ou l'un des paramètres d'environnement supplémentaires étant choisi parmi : nombre de personnes dans une pièce, hauteur d'installation de la balise (B1), distance au plafond de la balise (B1), écart entre la balise (B1) et d'autres balises (B1), nombre de terminaux mobiles (E) se trouvant en liaison de communication (KV4) avec la balise (B1) et nombre ou taille des objets métalliques dans la portée d'émission de la balise.

12. Système d'éclairage selon l'une des revendications précédentes, un ou plusieurs des paramètres suivants de la balise (B1) pouvant être modifiés par la configuration : intervalle d'émission, intensité du signal, numéro d'identification, direction du signal, paramètres de cryptage, état d'activation d'une interface de communication ou d'une interface d'alimentation et autorisation d'accès.

13. Procédé de configuration d'une balise (B1) d'un système d'éclairage, qui possède :
- un dispositif lumineux (L1),
- la balise (B1) disposée dans ou sur le dispositif lumineux (Ll),
- une interface d'énergie de la balise (B1) vers le dispositif lumineux (L1), moyennant quoi un accès d'énergie permanent est mis à disposition afin d'alimenter la balise (B1) avec de l'énergie,
- un dispositif détecteur (S1), la balise (B1) se trouvant dans une première liaison de communication (KV1) avec le dispositif détecteur (S1), et
- un terminal mobile (E), le terminal mobile (E) possédant un capteur, la balise (B1) se trouvant dans une deuxième liaison de communication (KV4) avec le terminal mobile (E),
et l'étape suivante est exécutée :
- acquisition, par le dispositif détecteur (S1), d'un paramètre d'environnement concernant un environnement du système d'éclairage,
**caractérisé par**
- réception, par la balise (B1), d'une valeur du capteur et
- autoconfiguration automatique de la balise (B1) à l'aide du paramètre d'environnement et au moyen de la valeur du capteur, plusieurs paramètres de la balise (B1) étant réglés lors de l'autoconfiguration de la balise (B1).
